# EUROPÄISCHE PATENTSCHRIFT

(11) **EP 3 208 449 B1**
(45) Veröffentlichungstag und Bekanntmachung des Hinweises auf die Patenterteilung: **18.12.2019**
(21) Anmeldenummer: 17150993.8
(22) Anmeldetag: 11.01.2017
(51) Int. Cl.: F02D 9/04, F02D 9/10, F16K 1/226

(54) **ABGASKLAPPENVORRICHTUNG FÜR EINE VERBRENNUNGSKRAFTMASCHINE**
EXHAUST GAS VALVE DEVICE FOR A COMBUSTION ENGINE
DISPOSITIF DE CLAPET DE GAZ BRÛLÉS POUR UN MOTEUR À COMBUSTION INTERNE

(30) Priorität: 15.02.2016 DE 102016102562
(43) Veröffentlichungstag der Anmeldung: 23.08.2017
(73) Patentinhaber: Pierburg GmbH, 41460 Neuss (DE)
(72) Erfinder: CAPAN, Alpay, 41366 Schwalmtal (DE); QUIRLL, Michael, 50937 Köln (DE); ANTONI, Christian, 50827 Köln (DE); BENDIG, Ahu, 41468 Neuss (DE)
(74) Vertreter: Patentanwälte ter Smitten Eberlein-Van Hoof Rütten Partnerschaftsgesellschaft mbB

(56) Entgegenhaltungen:
- EP-A1- 2 213 916
- CN-U- 202 040 420
- DE-A1-102009 049 614
- FR-A1- 2 678 039
- GB-A- 2 277 368
- JP-A- H08 121 198
- JP-A- 2007 032 301

## Beschreibung

Die vorliegende Erfindung betrifft eine Abgasklappenvorrichtung für eine Verbrennungskraftmaschine mit einem Strömungsgehäuse, das einen Abgaskanal begrenzt, einer Stellwelle, wenigstens einem Klappenkörper, der auf der Stellwelle drehbar im Abgaskanal angeordnet ist und einer Gehäusebohrung im Strömungsgehäuse, durch welche die Stellwelle nach außen ragt. Weiter umfasst die Abgasklappenvorrichtung eine Lagerbuchse, welche in der Gehäusebohrung angeordnet ist und in der die Stellwelle gelagert ist, und eine Dichtungsanordnung, welche einen Spalt zwischen der Gehäusebohrung des Strömungsgehäuses und der Stellwelle abdichtet.

Derartige Abgasklappenvorrichtungen dienen beispielsweise als Abgasstauklappen oder Abgasrückführklappen im Abgasstrang eines Verbrennungsmotors. Das Abgas enthält Schadstoffe, welche nicht nach außen dringen dürfen, so dass eine zuverlässige Abdichtung entlang der Welle, die nach außen in Richtung eines Aktuators ragt, sichergestellt werden muss. Diese Abdichtung muss bei den wechselnden thermischen Belastungen jederzeit einwandfrei funktionieren. Zusätzlich muss mit den Klappen eine sehr genaue Regelbarkeit eingehalten werden, um die Schadstoffrichtlinien moderner Verbrennungsmotoren zu erfüllen.

Eine gattungsgemäße Abgasklappenvorrichtung ist beispielsweise aus der WO 2014/086557 A1 bekannt.

Des Weiteren ist aus der EP 2 213 916 A1 eine Abgasklappenabdichtung bekannt, bei der ein größerer fester Dichtring zwischen zwei kleineren festen Dichtringen eingeklemmt ist, wobei der Außendurchmesser des größeren Dichtrings im Wesentlichen dem Innendurchmesser einer umgebenden Hülse entspricht und der Innendurchmesser der kleineren Dichtringe dem Wellenaußendurchmesser entspricht. Axial werden die Dichtringe durch ein Drahtgeflecht gegeneinander gedrückt.

Zusätzlich ist aus der CN202040420 U eine ähnlich aufgebaute Dichtung für eine Abgasklappe offenbart, welche jedoch aus mehreren axial hintereinander liegenden Dichtringen mit wechselndem Durchmesser besteht.

Die Aufgabe der vorliegenden Erfindung liegt darin, eine Abgasklappenvorrichtung für eine Verbrennungskraftmaschine zu schaffen, bei welcher eine dauerhafte und verbesserte Abdichtung nach außen hergestellt wird.

Diese Aufgabe wird durch eine Abgasklappenvorrichtung für eine Verbrennungskraftmaschine mit den Merkmalen des Anspruchs 1 gelöst.

Bei der erfindungsgemäßen Abgasklappenvorrichtung ist eine Dichtungsanordnung vorgesehen, welche aus mehreren axial zueinander beabstandeten Kolbenringen gebildet ist, welche an der Gehäusebohrung oder der Stellewelle radial anliegen. Unter axial beabstandeten Kolbenringen im Sinne der vorliegenden Erfindung ist zu verstehen, dass benachbarte Kolbenringe einen axialen Spalt zueinander ausbilden, in welchem sich lediglich das Abgas befindet. Erfindungsgemäß bilden die Kolbenringe, welche an der Gehäusebohrung anliegen zur Stellwelle und die an der Stellwelle anliegen zur Gehäusebohrung einen radialen Spalt aus, welcher durch wenigstens einen benachbarten Kolbenring, einen benachbarten Stellwellenabschnitt oder einen benachbarten Gehäusebohrungsabschnitt in radialer Richtung überdeckt ist. Unter einem Stellwellenabschnitt ist ein axialer Absatz an der Stellwelle zu verstehen, welcher eine definierte Erstreckung in radialer Richtung aufweist. Dementsprechend ist der Gehäusebohrungsabschnitt ein axialer Absatz des die Gehäusebohrung ausbildenden Gehäuses, bei welcher das Gehäuse eine definierte Erstreckung in radialer Richtung aufweist. Als Überdeckung in radialer Richtung, ist eine Anordnung zu verstehen, bei welcher die radialen Spalte beispielsweise zweier benachbarter Kolbenringe derart angeordnet sind, dass keine direkte rein axiale Verbindung zwischen benachbarten radialen Spalten vorhanden ist. Durch die Anordnung des radialen Spaltes und des dazu benachbarten Kolbenringes, des benachbarten Stellwellenabschnittes oder des benachbarten Gehäusebohrungsabschnittes wird der Spalt zwischen Stellwelle und Gehäusebohrung nach dem Prinzip der Labyrinth-Dichtung abgedichtet. Dadurch ist eine verbesserte Abdichtung nach außen gewährleistet.

Durch die Anordnung von axial zueinander beabstandeten Kolbenringen sind diese nicht in Kontakt miteinander. Dadurch wird eine Materialabtragung durch ein Aneinanderreiben der Kolbenringe vermieden, so dass die Dichtwirkung dauerhaft aufrechterhalten wird. Zudem wird vermieden, dass die Dichtungsanordnung als Kupplung zwischen Stellwelle und Gehäusebohrung wirkt. Auch aufgrund des geringen Verschleißes von Kolbenringen, kann die verbesserte Dichtwirkung dauerhaft aufrecht erhalten werden. An den Kolbenringen ergeben sich somit keine nennenswerten Materialabtragungen, welche für die Bildung von Spalten und damit für die Entstehung von Undichtigkeiten ursächlich sind. Unter Kolbenringen im Sinne der vorliegenden Erfindung werden Dichtelemente verstanden, welche gewöhnlich für Kolben zum Abdichten des Verbrennungsraumes eines Verbrennungsmotors eingesetzt werden. Diese Ringe sind keine geschlossenen Ringe, d.h. es ist am Umfang eine Öffnung vorhanden, so dass die Kolbenringe in eine radiale Richtung vorgespannt sein können.

Die erfindungsgemäße Dichtungsanordnung weist zusätzlich mindestens einen ersten Kolbenring und einen dazu benachbarten zweiten Kolbenring auf, wobei der Kolbenringaußendurchmesser des ersten Kolbenringes in einem unbelasteten Zustand größer ist, als ein Innendurchmesser der Gehäusebohrung und ein Kolbenringinnendurchmesser des zweiten Kolbenringes in einem unbelasteten Zustand kleiner ist, als ein Stellwellenaußendurchmesser. Der unbelastete Zustand im Sinne der Erfindung ist dabei der Zustand, bei welchem der Kolbenring noch nicht verbaut ist. Durch diese Merkmale wird der erste Kolbenring in einem eingebauten Zustand gegen die Gehäusebohrung und der zweite Kolbenring in einem eingebauten Zustand gegen die Stellwelle gepresst. Dies hat den Vorteil, dass eine verbesserte Abdichtung erzielt wird.

Vorzugsweise weist die Stellwelle radiale Außenumfangsnuten auf, in welchen die Kolbenringe, radial gegen die Gehäusebohrung verspannt, angeordnet sind. Unter einer Außenumfangsnut der Stellwelle im Sinne der Erfindung ist ein axialer Abschnitt der Stellwelle zu verstehen, welcher einen reduzierten Durchmesser der Stellwelle aufweist. Die Kolbenringe sind in diesen Außenumfangsnuten derart angeordnet, dass ein radial äußerer Teil der Kolbenringe aus den Außenumfangsnuten heraustritt und die Stellwelle radial überragt. Die Nuten bilden somit zusammen mit den Kolbenringen eine Dichtung nach dem Prinzip der Labyrinth-Dichtung aus. Durch die Außenumfangsnuten wird eine Bewegung der Kolbenringe auf der Stellwelle in axialer Richtung begrenzt. Dadurch wird vermieden, dass die Kolbenringe sich auf der Stellwelle axial verschieben, was zu einer Verschlechterung der Dichtwirkung führen würde. Somit wird dauerhaft eine gute Abdichtung erzielt.

In einer weiterführenden Ausgestaltung der Erfindung weist die Gehäusebohrung radiale Innenumfangsnuten auf, in welchen die Kolbenringe, radial gegen die Stellwelle verspannt, angeordnet sind. Eine radiale Innenumfangsnut im Sinne der Erfindung ist ein axialer Abschnitt der Gehäusebohrung, welcher einen vergrößerten Bohrungsinnendurchmesser aufweist. Die Kolbenringe sind in diesen Innenumfangsnuten derart angeordnet, dass ein radial innerer Teil der Kolbenringe aus den Innenumfangsnuten heraustritt und in dem Spalt zwischen Stellwelle und Gehäusebohrung angeordnet ist. Durch die Innenumfangsnuten wird eine Bewegung der Kolbenringe in der Gehäusebohrung in axialer Richtung begrenzt. Durch diese Anordnung der Kolbenringe wird der Spalt zwischen Stellwelle und Gehäusebohrung nach dem Prinzip der Labyrinth-Dichtung, die durch die Nuten und die Kolbenringe gebildet wird, abgedichtet.

Vorzugsweise sind die Kolbenringe in der Dichtungsanordnung abwechselnd radial gegen die Stellwelle und radial gegen die Gehäusebohrung verspannt. Dies hat den Vorteil, dass der Effekt der Labyrinth-Dichtung weiter verstärkt wird. Die Dichtwirkung der Dichtungsanordnung wird dadurch weiter verbessert.

Besonders vorteilhaft ist in axialer Richtung, beidseitig der Dichtungsanordnung, in radialen Stellwelle-Umfangsnuten jeweils ein Begrenzungsring angeordnet, welche eine axiale Verschiebung der Dichtungsanordnung auf der Stellwelle begrenzen. Diese Begrenzungsringe überragen die Stellwelle in radialer Richtung, so dass ein Teil der Begrenzungsringe in dem Spalt zwischen Stellwelle und Gehäusebohrung angeordnet ist. Die Dichtungsanordnung, die in diesem Spalt angeordnet ist, wird somit durch die Begrenzungsringe in axialer Richtung auf der Stellwelle begrenzt. Dadurch kann dauerhaft eine gute Dichtwirkung erzielt werden. Vorzugsweise ist der Abstand zwischen den Begrenzungsringen derart gewählt, dass die Kolbenringe nicht aneinander gepresst werden. Dadurch wird eine Materialabtragung durch ein aneinander reiben der Kolbenringe vermieden, so dass die Dichtwirkung dauerhaft aufrechterhalten wird. Zudem wird vermieden, dass die Dichtungsanordnung als Kupplung zwischen Stellwelle und Gehäusebohrung wirkt.

In einer bevorzugten Ausführungsform der Erfindung ist in axialer Richtung, beidseitig der Dichtungsanordnung, in radialen Gehäusebohrung-Umfangsnuten jeweils ein Begrenzungsring angeordnet, welche eine axiale Verschiebung der Dichtungsanordnung begrenzen. Diese Begrenzungsringe ragen in radialer Richtung in den Spalt zwischen Gehäusebohrung und Stellwelle. Die Dichtungsanordnung, die in diesem Spalt angeordnet ist, wird somit durch die Begrenzungsringe in axialer Richtung zur Gehäusebohrung begrenzt. Dadurch kann dauerhaft eine gute Dichtwirkung erzielt werden. Auch bei dieser Ausführungsform ist der Abstand zwischen den Begrenzungsringen vorzugsweise derart gewählt, dass die Kolbenringe nicht aneinander gepresst werden. Dadurch ergeben sich die zuvor beschriebenen Vorteile.

Vorzugsweise sind die Kolbenringe aus Edelstahl hergestellt. Dies hat den Vorteil, dass keinerlei Korrosionen entstehen, welche beispielweise an einer Dichtungsfläche auftreten können und damit die Dichtheit der Dichtungsanordnung vermindern. Somit wird eine verbesserte Dichtheit der Dichtungsanordnung dauerhaft sichergestellt.

In einer weiteren bevorzugten Ausführung der Erfindung weisen die Kolbenringe einen den Kolbenring öffnenden Schlitz auf, welcher mit einer Außenumfangstangente einen Winkel einschließt, wobei dieser Winkel bei einem ersten Kolbenring und bei einem dazu benachbarten zweiten Kolbenring, unterschiedlich ist. Eine Außenumfangstangente des Kolbenringes nach der vorliegenden Erfindung ist eine Tangente am gedachten Außenumfang des Kolbenringes, welche den gedachten Außenumfang des Kolbenringes im Schlitz berührt. Der Schlitz bildet somit mit der Außenumfangstangente einen Winkel. Der Vorteil dieser Anordnung der Schlitze liegt darin, dass sich die Schlitze von nebeneinander angeordneten Kolbenringen lediglich immer nur in einem kleinen Abschnitt überlappen können. Es kann somit nicht vorkommen, dass sich die Schlitze über die gesamte Länge überlappen. Dadurch wird die Dichtheit der Dichtungsanordnung weiter verbessert.

Es wird somit eine Abgasklappenvorrichtung für eine Verbrennungskraftmaschine geschaffen, welche sowohl nach außen als auch nach innen ausreichend dicht ist, da die Abdichtung nach dem Prinzip der Labyrinthdichtung erfolgt. Darüber hinaus kann diese Dichtheit dauerhaft sichergestellt werden, da ein Verschleiß der Dichtungsanordnung und damit eine Verschlechterung der Dichtwirkung durch Verwendung von Kolbenringen und durch eine kontaktlose Anordnung der Kolbenringe untereinander quasi ausgeschlossen ist.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
Figur 1: Erstes Ausführungsbeispiel einer Abgasklappenvorrichtung für eine Verbrennungskraftmaschine,
Figur 2: Vergrößerte Darstellung der Dichtungsanordnung nach Figur 1 nach einem ersten Ausführungsbeispiel,
Figur 3: Vergrößerte Darstellung einer Dichtungsanordnung nach einem zweiten Ausführungsbeispiel,
Figur 4: Vergrößerte Darstellung einer Dichtungsanordnung, nicht erfindungsgemäß,
Figur 5: Vergrößerte Darstellung einer Dichtungsanordnung, nicht erfindungsgemäß,
Figur 6a: Anordnung der Schlitze an den Kolbenringen, und
Figur 6b: resultierender Überlappungsspalt der Schlitze in Einbaulage.

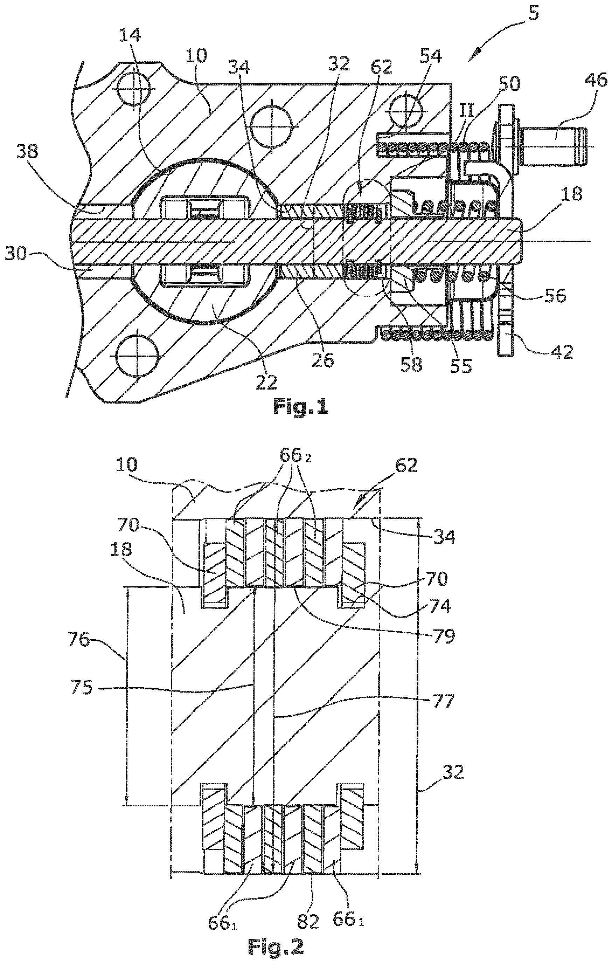

Figur 1 zeigt eine Abgasklappenvorrichtung 5 für eine Verbrennungskraftmaschine nach einem ersten Ausführungsbeispiels.

Die erfindungsgemäße Abgasklappenvorrichtung 5 besteht aus einem Strömungsgehäuse 10, in dem ein beispielsweise von Abgas durchströmter Abgaskanal 14 ausgebildet ist.

Der Abgaskanal 14 wird im Querschnitt durch eine Stellwelle 18 in zwei Hälften geteilt. Auf der Stellwelle 18 ist in dem Abgaskanal 14 ein Klappenkörper 22 befestigt vorgesehen. Die Stellwelle 18 ist im Strömungsgehäuse 10 über zwei Lagerbuchsen 26, 30 gelagert. Die erste Lagerbuchse 26 ist in einer mit einem Innendurchmesser 32 vorgesehen durchgängigen Gehäusebohrung 34 angeordnet, durch welche die Stellwelle 18 aus dem Strömungsgehäuse 10 nach außen ragt. Die zweite Lagerbuchse 30 ist auf der zur Gehäusebohrung 34 gegenüberliegenden Seite des Abgaskanals 14 in einer im Strömungsgehäuse 10 ausgebildeten Endbohrung 38 angeordnet.

Auf dem nach außen ragenden Ende der Stellwelle 18 ist eine als Hebel dienende Scheibe 42 befestigt, an deren radialem Endbereich ein Zapfen 46 befestigt ist, über den die Stellwelle 18 über ein nicht dargestelltes Hebelgestänge mit einem Aktor verbindbar ist, der insbesondere als ein Elektromotor ausgeführt werden kann.

Auf der zum Zapfen 46 axial entgegengesetzten Seite der Scheibe 42 ist im radial äußeren Bereich eine Rückstellfeder 50 angeordnet, deren eines Ende gegen einen an der Scheibe 42 ausgebildeten nicht dargestellten Vorsprung in bekannter Weise anliegt und deren gegenüberliegendes Ende gegen einen Anschlag 54 anliegt, der durch das Strömungsgehäuse 10 ausgebildet ist. Je nach Anwendung wird durch eine Vorspannung beim Einbau der Rückstellfeder 50 in bekannter Weise eine definierte failsafe Stellung der Stellwelle 18 bei Ausfall des Aktors angefahren.

Auf einer in axialer Richtung dem Abgaskanal 14 gegenüberliegenden Seite der Gehäusebohrung 34 ist ein Federanschlag 55 angeordnet, welcher die Gehäusebohrung 34 überdeckt. Zwischen dem Federanschlag 55 und der Scheibe 42 ist eine Feder 56 angeordnet, welche die Stellwelle in Richtung zu dem nach außen ragenden Ende der Stellwelle 18 vorspannt.

Ein sich ergebender Spalt 58 zwischen Stellwelle 18 und Gehäusebohrung 34 ist gesehen von dem Abgaskanal 14 hinter der ersten Lagerbuchse 26 durch eine Dichtungsanordnung 62 fluidisch abgedichtet.

In Figur 2 ist eine vergrößerte Ansicht der Dichtungsanordnung 62 nach Figur 1 dargestellt. In dieser Figur ist zu erkennen, dass die Dichtungsanordnung 62 durch mehrere erste Kolbenringe 66₁ und mehrere zweite Kolbenringe 66₂ gebildet ist, welche in axialer Richtung hintereinander angeordnet sind. Beidseitig der Dichtungsanordnung 62 ist jeweils ein Begrenzungsring 70 vorgesehen, welche eine axiale Verschiebung der Dichtungsanordnung 62 begrenzen. Die Begrenzungsringe 70 sind in radialen Stellwelle-Umfangsnuten 74 vorgesehen.

Die Kolbenringe 66₁, 66₂ sind im eingebauten Zustand abwechselnd entweder gegen die Stellwelle 18 oder die Gehäusebohrung 34 gepresst. Dementsprechend ist im eingebauten Zustand entweder ein Kolbenringinnendurchmesser 75 größer als ein Stellwellenaußendurchmesser 76 oder ein Kolbenringaußendurchmesser 77 ist kleiner als der Innendurchmesser 32 der Gehäusebohrung 34. Dadurch wechseln sich stellwellenseitige radiale Spalte 79, welche zwischen den ersten Kolbenringen 66₁ und der Stellwelle 18 vorhanden sind und gehäusebohrungsseitige radiale Spalte 82, welche zwischen den zweiten Kolbenringen 66₂ und der Gehäusebohrung 34 vorhanden sind, ab. Dadurch wird eine Abdichtung nach dem Prinzip einer Labyrinthdichtung realisiert.

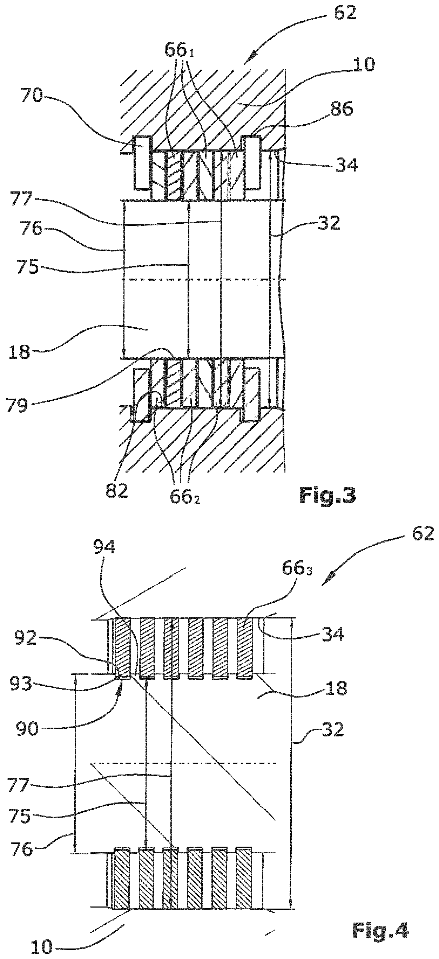

Die Figur 3 zeigt ein zweites Ausführungsbeispiel der Dichtungsanordnung 62 nach der vorliegenden Erfindung. Dieses Ausführungsbeispiel unterscheidet sich von dem ersten Ausführungsbeispiel dadurch, dass die Begrenzungsringe 70 nicht auf der Stellwelle 18, sonder in radialen Gehäusebohrung-Umfangsnuten 86 fixiert sind. Die Dichtungsanordnung 62 wird dadurch in axialer Richtung zum Strömungsgehäuse 10 begrenzt. Auch bei diesem Ausführungsbeispiel sind die Kolbenringe 66₁, 66₂ nach dem Prinzip der Labyrinthdichtung angeordnet.

Die Figur 4 zeigt ein nicht erfindungsgemäßes Beispiel der Dichtungsanordnung 62. Bei dieser Dichtungsanordnung 62 sind in der Stellwelle 18 mehrere axial zueinander beabstandete radiale Außenumfangsnuten 90 vorgesehen. Diese radialen Außenumfangsnuten 90 begrenzen die Bewegung der Kolbenringe 66₃ auf der Stellwelle 18 in axialer Richtung. Bei diesem Ausführungsbeispiel sind alle Kolbenringe 66₃ in radialer Richtung gegen die Gehäusebohrung 34 gepresst, so dass sich zwischen einem Stellwellen-Nutgrund 92 und dem jeweiligen Kolbenring 66₃ ein radialer Spalt 93 ergibt. Ein sich in axialer Richtung an die jeweiligen Außenumfangsnuten 90 anschließender Stellwellenabschnitt 94 überdeckt den radialen Spalt 93 zwischen dem Stellwellen-Nutgrund 92 und dem jeweiligen Kolbenring 66₃ in radialer Richtung. Dadurch ist eine Abdichtung des sich ergebender Spaltes 58 zwischen Stellwelle 18 und Gehäusebohrung 34 nach dem Prinzip einer Labyrinthdichtung gegeben.

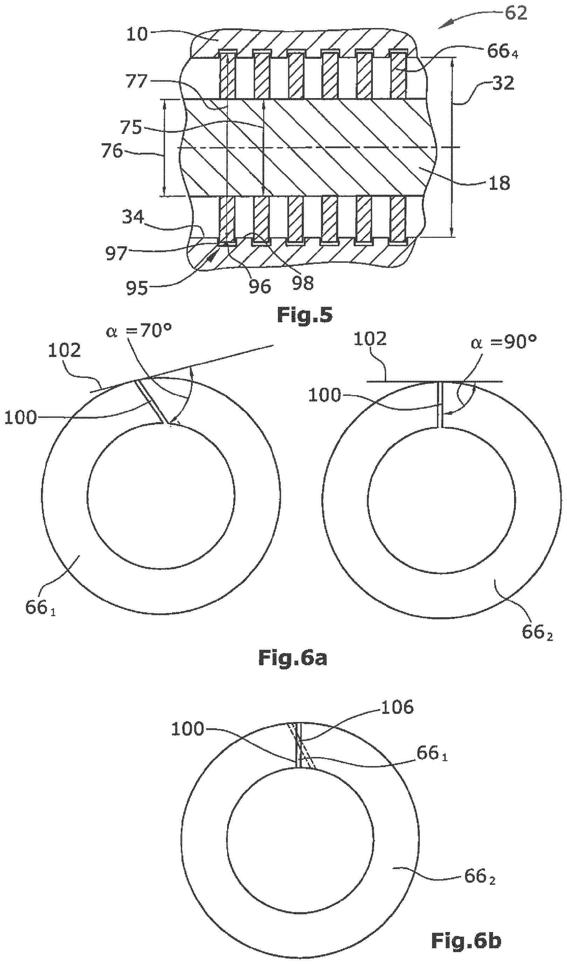

Figur 5 zeigt ein nicht erfindungsgemäßes Beispiel der Dichtungsanordnung 62. Bei dieser Dichtungsanordnung 62 sind in der Gehäusebohrung 34 mehrere axial zueinander beabstandete radiale Innenumfangsnuten 95 vorgesehen. Diese radialen Innenumfangsnuten 95 begrenzen die Bewegung der Kolbenringe 66₄ in der Gehäusebohrung 34 in axialer Richtung. Bei diesem Ausführungsbeispiel sind alle Kolbenringe 66₄ in radialer Richtung gegen die Stellwelle 18 gepresst, so dass sich zwischen einem Gehäusebohrungs-Nutgrund 96 und dem jeweiligen Kolbenring 66₄ ein radialer Spalt 97 ergibt. Ein sich in axialer Richtung an die jeweiligen Innenumfangsnuten 95 anschließender Gehäusebohrungsabschnitt 98 überdeckt den radialen Spalt 97 zwischen Gehäusebohrungs-Nutgrund 96 und dem jeweiligen Kolbenring 66₄ in radialer Richtung. Dadurch ist eine Abdichtung des sich ergebender Spaltes 58 zwischen Stellwelle 18 und Gehäusebohrung 34 nach dem Prinzip einer Labyrinthdichtung gegeben.

Die Figur 6a zeigt ein Ausführungsbeispiel von Schlitzen 100, zweier in der Dichtungsanordnung nebeneinanderliegender Kolbenringe 66₁, 66₂, 66₃, 66₄. Die Schlitze 100 sind dabei derart angeordnet, dass bei in der Dichtungsanordnung 62 nebeneinanderliegenden Kolbenringen 66₁, 66₂, 66₃, 66₄ ein Winkel α zwischen dem Schlitz 100 und einer Außenumfangstangente 102 des ersten Kolbenringes 66₁, 66₃, 66₄, 70° und beim zweiten Kolbenring 66₂, 66₃, 66₄, 90° ist. Der Winkel des ersten Kolbenringes 66₁, 66₃, 66₄ und des zweiten Kolbenringes 66₂, 66₃, 66₄ ist somit unterschiedlich. Die Figur 6b zeigt, dass sich bei einer solchen Anordnung der Schlitze 100 lediglich ein kleiner Überlappungsspalt 106 bildet.

Die beschriebene erfindungsgemäße Abgasklappenvorrichtung hat somit eine dauerhafte und verbesserte Abdichtung nach außen.

Die beschriebene Abgasklappenvorrichtung weist aufgrund der realisierten Labyrinthdichtung eine hohe Dichtheit auf. Durch die Verwendung von Kolbenringen in der Dichtungsanordnung ist eine hochtemperaturfeste Dichtungsanordnung geschaffen, welche zudem dauerhaft eine hohe Dichtheit garantiert. Die dauerhaft hohe Dichtheit der Dichtungsanordnung wird auch durch die äußerst geringe Korrosionsneigung der Kolbenringe unterstützt.

Es sollte deutlich sein, dass der Schutzbereich nicht auf die beschriebene Abgasklappenvorrichtung beschränkt ist, sondern verschiedene Modifikationen und konstruktive Änderungen denkbar sind. Insbesondere ist die Abgasklappenvorrichtung nicht auf einen einzigen Abgaskanal beschränkt. Auch kann die Verbindung zwischen Stellwelle und Hebel, sowie die Anordnung der Feder und der Rückstellfeder, unterschiedlich verwirklicht werden. Nicht zuletzt kann auch lediglich eine einzige Lagerbuchse oder mehrere Lagerbuchsen vorgesehen sein.

### Bezugszeichenliste

- 5: Abgasklappenvorrichtung
- 10: Strömungsgehäuse
- 14: Abgaskanal
- 18: Stellwelle
- 22: Klappenkörper
- 26: erste Lagerbuchse
- 30: zweite Lagerbuchse
- 32: Innendurchmesser
- 34: Gehäusebohrung
- 38: Endbohrung
- 42: Scheibe
- 46: Zapfen
- 50: Rückstellfeder
- 54: Anschlag
- 55: Federanschlag
- 56: Feder
- 58: Spalt
- 62: Dichtungsanordnung
- 66₁, 66₂: Kolbenringe des ersten/zweiten Ausführungsbeispiels
- 66₃: Kolbenringe des dritten Ausführungsbeispiels
- 66₄: Kolbenringe des vierten Ausführungsbeispiels
- 70: Begrenzungsring
- 74: Stellwelle-Umfangsnut
- 75: Kolbenringinnendurchmesser
- 76: Stellwellenaußendurchmesser
- 77: Kolbenringaußendurchmesser
- 79: stellwellenseitiger radialer Spalt
- 82: gehäusebohrungsseitiger radialer Spalt
- 86: Gehäusebohrung-Umfangsnut
- 90: Außenumfangsnut
- 92: Stellwellen-Nutgrund
- 93: radialer Spalt
- 94: Stellwellenabschnitt
- 95: Innenumfangsnut
- 96: Gehäusebohrungs-Nutgrund
- 97: radialer Spalt
- 98: Gehäusebohrungsabschnitt
- 100: Schlitz
- 102: Außenumfangstangente
- 106: Überlappungsspalt
- α: Winkel

## Patentansprüche

1. Abgasklappenvorrichtung (5) für eine Verbrennungskraftmaschine mit einem Strömungsgehäuse (10), das einen Abgaskanal (14) begrenzt,
einer Stellwelle (18),
wenigstens einem Klappenkörper (22), der auf der Stellwelle (18) drehbar im Abgaskanal (14) angeordnet ist,
einer Gehäusebohrung (34) im Strömungsgehäuse (10), durch welche die Stellwelle (18) nach außen ragt,
einer Lagerbuchse (26), welche in der Gehäusebohrung (34) angeordnet ist und in der die Stellwelle (18) gelagert ist, und einer Dichtungsanordnung (62), welche einen Spalt (58) zwischen der Gehäusebohrung (34) des Strömungsgehäuses (10) und der Stellwelle (18) abdichtet,
**dadurch gekennzeichnet, dass**
die Dichtungsanordnung (62) aus mehreren axial zueinander beabstandeten Kolbenringen (66₁, 66₂,) gebildet ist, welche an der Gehäusebohrung (34) oder der Stellwelle (18) radial anliegen, wobei die Kolbenringe (66₁, 66₂, 66₃, 66₄), welche an der Gehäusebohrung (34) anliegen zur Stellwelle (18) und die an der Stellwelle (18) anliegen zur Gehäusebohrung (34) einen radialen Spalt (79, 82, 92, 97) ausbilden, welcher durch wenigstens einen benachbarten Kolbenring (66₁, 66₂,), einen benachbarten Stellwellenabschnitt (94) oder einen benachbarten Gehäusebohrungsabschnitt (98) in radialer Richtung überdeckt ist und dass die Dichtungsanordnung (62) mindestens einen ersten Kolbenring (66₁,) und einen dazu benachbarten zweiten Kolbenring (66₂,) aufweist, wobei ein Kolbenringaußendurchmesser (77) des ersten Kolbenringes (66₁, 66₃) in einem unbelasteten Zustand größer als ein Innendurchmesser (32) der Gehäusebohrung (34) ist und dass ein Kolbenringinnendurchmesser (75) des zweiten Kolbenringes (66₂, 66₃) in einem unbelasteten Zustand kleiner ist als ein Stellwellenaußendurchmesser (76) der Stellwelle (18).

2. Abgasklappenvorrichtung (5) für eine Verbrennungskraftmaschine nach Anspruch 1, **dadurch gekennzeichnet, dass** die Stellwelle (18) radiale Außenumfangsnuten (90) aufweist, in welchen die Kolbenringe, radial gegen die Gehäusebohrung (34) verspannt, angeordnet sind.

3. Abgasklappenvorrichtung (5) für eine Verbrennungskraftmaschine nach Anspruch 1, **dadurch gekennzeichnet, dass** die Gehäusebohrung (34) radiale Innenumfangsnuten (95) aufweist, in welchen die Kolbenringe, radial gegen die Stellwelle (18) verspannt, angeordnet sind.

4. Abgasklappenvorrichtung (5) für eine Verbrennungskraftmaschine nach einem der vorherigen Ansprüche, **dadurch gekennzeichnet, dass** die Kolbenringe (66₁, 66₂) in der Dichtungsanordnung (62) abwechselnd radial gegen die Stellwelle (18) und radial gegen die Gehäusebohrung (34) verspannt sind.

5. Abgasklappenvorrichtung (5) für eine Verbrennungskraftmaschine nach Anspruch 1, **dadurch gekennzeichnet, dass** in axialer Richtung beidseitig der Dichtungsanordnung (62) in radialen Stellwelle-Umfangsnuten (74) jeweils ein Begrenzungsring (70) angeordnet ist, welche eine axiale Verschiebung der Dichtungsanordnung (62) auf der Stellwelle (18) begrenzen.

6. Abgasklappenvorrichtung (5) für eine Verbrennungskraftmaschine nach Anspruch 1, **dadurch gekennzeichnet, dass** in axialer Richtung beidseitig der Dichtungsanordnung (62) in radialen Gehäusebohrung-Umfangsnuten (86) jeweils ein Begrenzungsring (70) angeordnet ist, welche eine axiale Verschiebung der Dichtungsanordnung (62) zum Strömungsgehäuse (10) begrenzen.

7. Abgasklappenvorrichtung (5) für eine Verbrennungskraftmaschine nach einem der vorherigen Ansprüche, **dadurch gekennzeichnet, dass** die Kolbenringe (66₁, 66₂, 66₃, 66₄) aus Edelstahl hergestellt sind.

8. Abgasklappenvorrichtung (5) für eine Verbrennungskraftmaschine nach einem der vorherigen Ansprüche, **dadurch gekennzeichnet, dass** die Kolbenringe (66₁, 66₂,) einen den Kolbenring (66₁, 66₂,) öffnenden Schlitz (100) aufweisen, welcher mit einer Außenumfangstangente (102) einen Winkel (α) einschließt, wobei dieser Winkel (α) bei einem ersten Kolbenring (66₁, ) und bei einem dazu benachbarten zweiten Kolbenring (66₂, ), unterschiedlich ist.

## Claims

1. Exhaust gas flap device (5) for an internal combustion engine having a flow housing (10) defining an exhaust channel (14),
an actuating shaft (18),
at least one flap body (22) arranged rotatably on the actuating shaft (18) in the exhaust channel (14),
a housing bore (34) in the flow housing (10) through which the actuating shaft (18) projects outwardly,
a bearing bush (26) which is arranged in the housing bore (34) and in which the actuating shaft (18) is supported, and
a seal arrangement (62) sealing a gap (58) between the housing bore (34) of the flow housing (10) and the actuating shaft (18),
**characterized in that**
the seal arrangement (62) is formed by a plurality of piston rings (66₁, 66₂) spaced apart in the axial direction, which abut radially on the housing bore (34) or the actuating shaft (18), wherein the piston rings (66₁, 66₂, 66₃, 66₄), which abut on the housing bore (34) form a radial gap (79, 82, 92, 97) to the actuating shaft (18) and those abutting against the actuating shaft (18) form a gap to the housing bore (34), which gap is covered in the radial direction by at least one adjacent piston ring (66₁, 66₂), an adjacent actuating shaft portion (94) or an adjacent housing bore portion (98), and that the seal arrangement (62) comprises at least a first piston ring (66₁) and a second adjacent piston ring (66₂), wherein a piston ring outer diameter (77) of the first piston ring (66₁, 66₃) is greater in an unloaded state than an inner diameter (32) of the housing bore (34), and that a piston ring inner diameter (75) of the second piston ring (66₂, 66₃) is smaller in an unloaded state than an actuating shaft outer diameter (76) of the actuating shaft (18).

2. Exhaust flap device (5) for an internal combustion engine of claim 1, **characterized in that** the actuating shaft (18) has radial outer circumferential grooves (90), in which the piston rings are arranged in a manner braced radially against the housing bore (34).

3. Exhaust flap device (5) for an internal combustion engine of claim 1, **characterized in that** the housing bore (34) has radial inner circumferential grooves (95), in which the piston rings are arranged in a manner braced radially against the housing bore (34).

4. Exhaust flap device (5) for an internal combustion engine of one of the preceding claims, **characterized in that** the piston rings (66₁, 66₂) in the seal arrangement (62) are braced alternately radially against the actuating shaft (18) and radially against the housing bore (34).

5. Exhaust flap device (5) for an internal combustion engine of claim 1, **characterized in that**, seen in the axial direction, a limiting ring (70) is arranged respectively on either side of the seal arrangement (62) in radial actuating shaft circumferential grooves (74), said rings limiting the axial displacement of the seal arrangement (62) on the actuating shaft (18).

6. Exhaust flap device (5) for an internal combustion engine of claim 1, **characterized in that**, seen in the axial direction, a limiting ring (70) is arranged respectively on either side of the seal arrangement (62) in radial housing bore circumferential grooves (86), said rings limiting the axial displacement of the seal arrangement (62) to the flow housing (10).

7. Exhaust flap device (5) for an internal combustion engine of one of the preceding claims, **characterized in that** the piston rings (66₁, 66₂, 66₃, 66₄) are made of stainless steel.

8. Exhaust flap device (5) for an internal combustion engine of one of the preceding claims, **characterized in that** the piston rings (66₁, 66₂) have a slot (100) opening the piston ring (66₁, 66₂), which slot includes an angle (α) with an outer peripheral tangent (102), this angle (α) being different in a first piston ring (66₁) and in a second piston ring (66₂) adjacent thereto.

## Revendications

1. Dispositif de clapet de gaz d'échappement (5) destiné à un moteur à combustion interne comprenant un boitier d'écoulement (10) définissant un canal d'échappement (14),
un arbre d'actionnement (18),
au moins un corps de clapet (22) monté à rotation sur l'arbre d'actionnement (18) dans le canal d'échappement (14),
un alésage du boitier (34) dans le boitier d'écoulement (10) à travers lequel l'arbre d'actionnement (18) saille vers l'extérieur,
un coussinet (26) qui est disposé dans l'alésage du boitier (34) et dans lequel est supporté l'arbre d'actionnement (18), et
un dispositif d'étanchéité (62) qui scelle un espace (58) entre l'alésage du boitier (34) du boitier d'écoulement (10) et l'arbre d'actionnement (18),
**caractérisé en ce que**
le dispositif d'étanchéité (62) est formé par une pluralité de segments de piston (66₁, 66₂) espacés axialement l'un de l'autre, qui butent radialement sur l'alésage du boitier (34) ou l'arbre d'actionnement (18), les segments de piston (66₁, 66₂, 66₃, 66₄) qui butent contre l'alésage du boitier (34) présentant une fente radiale (79, 82, 92, 97) vers l'arbre d'actionnement (18) et ceux qui butent contre l'arbre d'actionnement (18) présentant une fente radiale vers l'alésage du boitier (34), la fente recouvrant par au moins un segment de piston adjacent (66₁, 66₂) une partie de l'arbre d'actionnement adjacente (94) ou une partie de l'alésage du boitier adjacente (98) dans la direction radiale, et **en ce que** le dispositif d'étanchéité (62) comporte au moins un premier segment de piston (66₁) et un deuxième segment de piston adjacent (66₂), un diamètre extérieur du segment de piston (77) du premier segment de piston (66₁, 66₃) étant supérieur, à l'état non chargé, au diamètre intérieur (32) de l'alésage du boitier (34) et le diamètre intérieur du piston (75) du deuxième segment de piston (66₂, 66₃) est inférieur, à l'état non chargé, à celui d'un diamètre extérieur de l'arbre d'actionnement (76) de l'arbre d'actionnement (18).

2. Dispositif de clapet de gaz d'échappement (5) pour un moteur à combustion interne selon la revendication 1, **caractérisé en ce que** l'arbre d'actionnement (18) présente des rainures circonférentielles extérieures radiales (90), dans lesquelles les segments de piston sont sollicités radialement contre l'alésage du boitier (34).

3. Dispositif de clapet de gaz d'échappement (5) pour un moteur à combustion interne selon la revendication 1, **caractérisé en ce que** l'alésage de boitier (34) présente des rainures circonférentielles intérieures radiales (95) dans lesquelles sont disposés des segments de piston (66₄) sollicités radialement contre l'arbre d'actionnement (18).

4. Dispositif de clapet de gaz d'échappement (5) pour un moteur à combustion interne selon l'une des revendications précédentes, **caractérisé en ce que** les segments de piston (661, 662) de l'ensemble joint (62) alternent radialement contre l'arbre d'actionnement (18) et radialement contre l'alésage de boitier (34).

5. Dispositif de clapet de gaz d'échappement (5) pour un moteur à combustion interne selon la revendication 1, **caractérisé en ce que**, dans la direction axiale, un anneau de limitation (70) est disposé des deux côtés du dispositif d'étanchéité (62) dans chacune des rainures circonférentielles de l'arbre d'actionnement radiales (74), les anneaux limitant le déplacement axial du dispositif d'étanchéité (62) sur l'arbre d'actionnement (18).

6. Dispositif de clapet de gaz d'échappement (5) pour un moteur à combustion interne selon la revendication 1, **caractérisé en ce que**, dans la direction axiale, un anneau de limitation (70) est disposé des deux côtés du dispositif d'étanchéité (62) dans chacune des rainures circonférentielles de l'alésage du boitier radiales (86), les anneaux limitant le déplacement axial du dispositif d'étanchéité (62) vers le boitier d'écoulement (10).

7. Dispositif de clapet de gaz d'échappement (5) pour un moteur à combustion interne selon l'une des revendications précédentes, **caractérisé en ce que** les segments de piston (66₁, 66₂, 66₃, 66₄) sont en acier inoxydable.

8. Dispositif de clapet de gaz d'échappement (5) pour un moteur à combustion interne selon l'une des revendications précédentes, **caractérisé en ce que** les segments de piston (66₁, 66₂) présentent une fente (100) ouvrant le segment de piston (66₁, 66₂), la fente et la tangente périphérique externe (102) incluant un angle (α), cet angle (α) étant différent dans un premier segment de piston (66₁) et dans un second segment de piston (66₂) adjacent.
